# EUROPEAN PATENT SPECIFICATION

(11) **EP 0 921 530 B1**
(45) Date of publication and mention of the grant of the patent: **19.11.2003**
(21) Application number: 98307281.0
(22) Date of filing: 09.09.1998
(51) Int. Cl.: H01B 1/24, C08K 3/04, C08L 23/08

(54) **Cable semiconducting shield**
Halbleitfähiger Kabel-Schirm
Ecran semiconducteur pour câble

(30) Priority: 02.12.1997 US 982825
(43) Date of publication of application: 09.06.1999
(73) Proprietor: UNION CARBIDE CHEMICALS & PLASTICS TECHNOLOGY CORPORATION, Danbury, Connecticut 06817-0001 (US)
(72) Inventor: Du, Luke Chi-Chung, New Jersey 07652 (US); Pang, Kawai Peter, Neshanic Station, New Jersey 08853 (US); Reid, Charles Griffith, Millington, New Jersey 07946 (US)
(74) Representative: Hayes, Adrian Chetwynd

(56) References cited:
- DATABASE WPI Section Ch, Week 9251 Derwent Publications Ltd., London, GB; Class A17, AN 92-418253 XP002093952 & JP 04 311744 A (MITSUBISHI CABLE IND LTD), 4 November 1992
- DATABASE WPI Section Ch, Week 9251 Derwent Publications Ltd., London, GB; Class A17, AN 92-418255 XP002093953 & JP 04 311746 A (MITSUBISHI CABLE IND LTD), 4 November 1992
- PATENT ABSTRACTS OF JAPAN vol. 015, no. 361 (C-0867), 12 September 1991 & JP 03 143938 A (TOYO INK MFG CO LTD), 19 June 1991
- DATABASE WPI Section Ch, Week 8334 Derwent Publications Ltd., London, GB; Class A17, AN 83-743825 XP002093954 & JP 58 118839 A (HITACHI CABLE LTD) , 15 July 1983

## Description

### Field of the Invention

This invention relates to compositions useful in the preparation of cable semiconducting shields.

### Background of the Invention

A typical electric power cable generally comprises one or more conductors in a cable core that is surrounded by several layers of polymeric materials including a first semiconducting shield layer (conductor or strand shield), an insulating layer, a second semiconducting shield layer (insulation shield), a metallic tape or wire shield, and a protective jacket. Additional layers within this construction such as moisture impervious materials are often incorporated.

Polymeric semiconducting shields have been utilized in multilayered power cable construction for many decades. Generally, they are used to fabricate solid dielectric power cables rated for voltages greater than 1 kilo Volt (kV). These shields are used to provide layers of intermediate conductivity between the high potential conductor and the primary insulation, and between the primary insulation and the ground or neutral potential. The volume resistivity of these semiconducting materials is typically in the range of 10⁻¹ to 10⁸ ohm-cm when measured on a completed power cable construction using the methods described in ICEA S-66-524, section 6.12, or IEC 60502-2 (1997), Annex C. Typical shield compositions contain a polyolefin, such as ethylene/vinyl acetate copolymer with a high vinyl acetate content (a sticky copolymer), conductive carbon black, an organic peroxide crosslinking agent, and other conventional additives such as a nitrile rubber, which functions as a strip force reduction aid, processing aids, and antioxidants. These compositions are usually prepared in granular or pellet form. Polyolefin formulations such as these are disclosed in United States patent 4,286,023 and European Patent Application 420 271.

The crosslinking of polymers with free radical initiators such as organic peroxides is well known. Generally, the organic peroxide is incorporated into the polymer by melt blending in a roll mill, a biaxial screw kneading extruder, or a Banbury™ mixer at a temperature lower than the decomposition temperature of the organic peroxide. An alternative method for organic peroxide incorporation into a polymeric compound is to mix liquid peroxide and pellets of the polymer in a blending device, such as a Henschel™ mixer or a soaking device such as a simple drum tumbler, which are maintained at temperatures above the freeze point of the organic peroxide and below the decomposition temperature of the organic peroxide and the melt temperature of the polymer. Following the organic peroxide incorporation, the polymer/organic peroxide blend is then, for example, introduced into an extruder where it is extruded around an electrical conductor at a temperature lower than the decomposition temperature of the organic peroxide to form a cable. The cable is then exposed to higher temperatures at which the organic peroxide decomposes to provide free radicals, which crosslink the polymer.

Addition of solid organic peroxides to semiconducting shield compositions that are inherently sticky is usually limited by the temperature of the addition process. At the temperature where traditional organic peroxides such as dicumyl peroxide melt and flow easily, some semiconducting shield compositions will usually be too sticky to be handled in bulk for proper blending with the organic peroxides. Lowering the temperature of the blending process reduces the efficiency of peroxide incorporation and increases the risk of peroxide crystals accumulating on semiconductive shield composition pellet surfaces causing both safety and cable quality problems.

Liquid peroxides, which can be processed at or near room temperature, such as t-butyl cumyl peroxide for example, are offered as a solution to the problem since they do not have to be melted. However, these liquid peroxides are volatile in nature and have much higher vapor pressures than conventional solid organic peroxides such as dicumyl peroxide. Volatility becomes a serious safety issue insofar as the handling of semiconducting shield compositions containing these volatile peroxides, e.g., air used for pneumatic transport of granules of the polymer/organic peroxide blend can become saturated with the liquid organic peroxide and present a serious safety concern. The quality of the semiconducting shield can also be compromised when the volatile organic peroxide escapes into the atmosphere and less than the desired crosslinking occurs.

Blends of solid and liquid organic peroxides have also been disclosed in United States Patent Nos. 4,202,790; 4,239,644; 4,450,302; 4,847,232, 5,298,564; and 5,539,061. The primary objective of these blends is to reduce the vapor pressure of the organic peroxides such that they may be used in the incorporation methods described above. However, blends of liquid bis-peroxides with, for example, solid dicumyl peroxide have not been found to be advantageous due to the shorter half-life decomposition time of the dicumyl peroxide at polymer extrusion temperatures of 115 to 135 degrees C leading to scorch (premature cure). Blends of liquid bis-peroxides and liquid peroxides have also been proposed, but, in general, behave similarly to pure bis-peroxides insofar as premature cure is concerned, and have not led to the solution of the sticky elastomer problem.

### Disclosure of the Invention

An object of this invention, therefore, is to provide a composition useful in the preparation of semiconducting shields containing sticky elastomers. This composition will contain, in addition to the sticky elastomer, a mixture of organic peroxides, which is low melting and exhibits low volatility and improved scorch resistance relative to organic peroxide blends that contain dicumyl peroxide and/or the like. Other objects and advantages will become apparent hereinafter.

According to the invention, a semiconducting shield composition has been discovered which meets the above object. The composition comprises (i) 98 to 99.8 percent by weight of a crosslinkable, semiconducting elastomer, which agglomerates in the range of 30 to 40 degrees Celsius and (ii) 0.2 to 2.0 percent by weight of an organic peroxide blend containing 70 to 90 percent by weight of a mixture of meta and para isomers of bis(alpha-t-butyl peroxyisopropyl)benzene in eutectic equilibrium and 10 to 30 percent by weight of a peroxide, which is liquid at minus 10 to plus 25 degrees C.

### Description of the Preferred Embodiment(s)

This invention is particularly concerned with sticky elastomers. The term "sticky" as it applies to elastomers is defined as an elastomer, which, although particulate at temperatures below the sticking temperature, agglomerates at temperatures at or above the sticking temperature. The term "sticking temperature", in the context of this specification, is the temperature at which elastomeric particles agglomerate under extrusion and/or crosslinking conditions. Generally, the sticky elastomers are polymers, which are either amorphous or have a crystallinity of less than about 10 percent by weight. An example is a copolymer of ethylene and an unsaturated ester, which obtains its stickiness from the unsaturated ester, the higher the content of unsaturated ester the greater the stickiness. An ethylene/vinyl acetate copolymer having a vinyl acetate content of 33 percent by weight, for example, will have a sticking temperature of about 30 degrees C.

The sticking temperature of an elastomer is the temperature at which pellets or granules of the elastomer will begin to agglomerate or stick to each other, thus preventing free flowing material. This temperature can be measured by several methods. A common method is to place a 100 gram sample of pellets or granules in a 500 mL jar in a controlled temperature environment. The temperature is then determined at which the pellets or granules are no longer free-flowing materials after exposure to temperature for a prescribed time.

Component (i) is any crosslinkable sticky elastomer useful in semiconducting shield compositions. These sticky elastomers agglomerate at temperatures in the range of 30 to 40 degrees C. Examples of these elastomers follow. They are generally free flowing, granular resins prepared by conventional gas phase processes. Alternatively, the sticky elastomers can be blends of polyolefins and emulsion process elastomers such as acrylonitrile-butadiene rubber.

The elastomers most commonly used in semiconducting shield compositions are copolymers of ethylene and unsaturated esters having an ester content of at least 10 percent by weight based on the weight of the copolymer. The ester content is often as high as 80 percent by weight, and, at these levels, the primary monomer is the ester. The preferred range of ester content is 30 to 45 percent by weight. The percent by weight is based on the total weight of the copolymer. Examples of the unsaturated esters are vinyl esters and acrylic and methacrylic acid esters. The ethylene/unsaturated ester copolymers are usually made by conventional high pressure processes. These high pressure processes are typically run at pressures above 105 MPa (15,000 psi (pounds per square inch)). The copolymers can have a density in the range of 0.900 to 0.990 gram per cubic centimeter, and preferably have a density in the range of 0.920 to 0.970 gram per cubic centimeter. The copolymers can also have a melt index in the range of 10 to 100 grams per 10 minutes, and preferably have a melt index in the range of 20 to 50 grams per 10 minutes. Melt index is determined under ASTM D-1238, Condition E. It is measured at 190° C and 2160 grams.

The ester can have 4 to 20 carbon atoms, and preferably has 4 to 7 carbon atoms. Examples of vinyl esters are vinyl acetate, vinyl butyrate, vinyl pivalate, vinyl neononanoate, vinyl neodecanoate, and vinyl 2-ethylhexanoate. Vinyl acetate is preferred. Examples of acrylic and methacrylic acid esters are lauryl methacrylate; myristyl methacrylate; palmityl methacrylate; stearyl methacrylate; 3-methacryloxypropyltrimethoxysilane; 3-methacryloxypropyltriethoxysilane; cyclohexyl methacrylate; n-hexylmethacrylate; isodecyl methacrylate; 2-methoxyethyl methacrylate; tetrahydrofurfuryl methacrylate; octyl methacrylate; 2-phenoxyethyl methacrylate; isobornyl methacrylate; isooctylmethacrylate; octyl methacrylate; isooctyl methacrylate; oleyl methacrylate; ethyl acrylate; methyl acrylate; t-butyl acrylate; n-butyl acrylate; and 2-ethylhexyl acrylate. Methyl acrylate, ethyl acrylate, and n- or t-butyl acrylate are preferred. In the case of alkyl acrylates and methacrylates, the alkyl group can have 1 to 8 carbon atoms, and preferably has 1 to 4 carbon atoms. As noted above, the alkyl group can be substituted with an oxyalkyltrialkoxysilane, for example.

Other examples of elastomers are as follows:
IR (polyisoprene)
BR (polybutadiene)
SBR (polymer of butadiene copolymerized with styrene)
Nitrile (polymer of butadiene copolymerized with acrylonitrile). These elastomers are also referred to as nitrile rubbers.
Butyl (polymer of isobutylene copolymerized with isoprene)
EPM (polymer of ethylene copolymerized with propylene)
EPDM (polymer of ethylene copolymerized with propylene and a diene such as hexadiene, dicyclopentadiene, or ethylidene norbornene)
Copolymers of ethylene and a C3-C12 alpha-olefin
Terpolymers of ethylene, an alpha olefin (C3-C12), and a diene (preferably non-conjugated)
Neoprene (polychloroprene)
Silicone (polydimethyl siloxane)
Copolymers of ethylene and vinyltrimethoxy silane
Copolymers of ethylene and one or more of acrylonitrile or maleic acid esters
Copolymers of butadiene and isoprene
Polystyrene
Terpolymers of styrene, butadiene, and isoprene
Chlorobutyl (chlorinated copolymer of isobutylene and isoprene)
Bromobutyl (brominated copolymer of isobutylene and isoprene)
Brominated copolymer of isobutylene and paramethylstyrene

The ethylene polymers useful in subject invention are preferably produced in the gas phase. They can also be produced in the liquid phase in solutions or slurries by conventional techniques. They can be produced by high pressure or low pressure processes. Low pressure processes are typically run at pressures below 7MPa (1000 psi) whereas, as noted above, high pressure processes are typically run at pressures above 105 MPa (15,000 psi). Typical catalyst systems, which can be used to prepare these polymers are magnesium/titanium based catalyst systems, which can be exemplified by the catalyst system described in United States patent 4,302,565; vanadium based catalyst systems such as those described in United States patents 4,508,842 and 5,332,793; 5,342,907; and 5,410,003; a chromium based catalyst system such as that described in United States patent 4,101,445; a metallocene catalyst system such as that described in United States patents 4,937,299 and 5,317,036; or other transition metal catalyst systems. Many of these catalyst systems are often referred to as Ziegler-Natta catalyst systems. Catalyst systems, which use chromium or molybdenum oxides on silica-alumina supports, are also useful. Typical processes for preparing the polymers are also described in the aforementioned patents. Typical in situ polymer blends and processes and catalyst systems for providing same are described in United States Patents 5,371,145 and 5,405,901. A conventional high pressure process is described in Introduction to Polymer Chemistry, Stille, Wiley and Sons, New York, 1962, pages 149 to 151. The sticky elastomers other than the ethylene polymers are also prepared by conventional processes.

The amount of component (i) in the semiconducting shield composition can be in the range of 98 to 99.8 percent by weight, and is preferably in the range of 99 to 99.6 percent by weight. The amount of component (ii) can be in the range of 0.2 to 2.0 percent by weight, and is preferably in the range of 0.4 to 1.0 percent by weight. These percentages by weight are based on the combined weight of components (i) and (ii).

Component (ii) is a blend of a eutectic bis-organic peroxide, which is defined as a mixture of para and meta isomers of an organic bis-peroxide wherein the isomers are in eutectic equilibrium, and a liquid organic peroxide, described below. For the case of bis(alpha-t-butyl peroxyisopropyl)benzene, the eutectic point is at a 78:22 meta:para weight ratio. Broadly, the meta to para weight ratio can be in the range of 3:1 to 4.5:1. Commercial grades of bis(alpha-t-butyl peroxyisopropyl)benzene are generally produced at a meta:para weight ratio of 65:35, which is the consequence of the thermodynamic equilibria of the reactants and reactor conditions used to make the peroxide. The eutectic blend of bis(alpha-t-butyl peroxyisopropyl)benzene can be prepared by adding purified meta-bis(alpha-t-butyl peroxyisopropyl)benzene to commercially available bis(alpha-t-butyl peroxyisopropyl)benzene.

The reduction in the melt temperature of bis(alpha-t-butyl peroxyisopropyl)benzene at the eutectic isomer blend is about 10 degrees C relative to the commercially available 65:35 meta:para weight ratio blend.

The low melting eutectic bis(alpha-t-butyl peroxyisopropyl)benzene is then blended with a small amount of a liquid organic peroxide, such as tert-butyl cumyl peroxide, to further reduce the melt temperature of the peroxide blend. These liquid peroxides are liquid at temperatures in the range of minus 10 to plus 25 degrees C. The organic peroxide blend contains 70 to 90 percent by weight of a eutectic bis(alpha-t-butyl peroxyisopropyl)benzene and 10 to 30 percent by weight of the liquid organic peroxide, and preferably 75 to 85 percent by weight of the bis-peroxide and 15 to 25 percent by weight of the liquid peroxide. The low level of liquid peroxide minimizes the volatility problem while optimizing the melt temperature reduction. The further reduction in temperature as a result of the addition of the liquid organic peroxide is generally in the range of 5 to 20 degrees C. Examples of useful liquid peroxides are t-butyl cumyl peroxide, 2,5-bis(t-butylperoxy)2,5-dimethylhexyne-3, 2,5-bis(t-butylperoxy)2,5-dimethylhexane, isopropylcumyl-t-butylperoxide, and cumyl isopropylcumylperoxide.

Conventional additives, which can be introduced into the formulation, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Fillers and additives can be added in amounts ranging from less than 0.1 to more than 50 percent by weight based on the weight of the composition.

In order to provide a semiconducting shield it is necessary to incorporate conductive particles into the composition. These conductive particles are generally provided by particulate carbon black. Useful carbon blacks can have a surface area of 50 to 1000 square meters per gram. The surface area is determined under ASTM D 4820-93a (Multipoint B.E.T. Nitrogen Adsorption). The carbon black is used in the semiconducting shield composition in an amount of 20 to 60 percent by weight based on the weight of the composition, and is preferably used in an amount of 25 to 45 percent by weight. Examples of conductive carbon blacks are the grades described by ASTM N550, N472, N351, N110, and acetylene black.

Examples of antioxidants are: hindered phenols such as tetrakis[methylene(3,5-di-tert- butyl-4-hydroxy-hydrocinnamate)]methane, bis[(beta-(3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenylphosphonite; thio compounds such as dilaurylthiodipropionate, dimyristylthiodipropionate, and distearylthiodipropionate; various siloxanes; and various amines such as polymerized 2,2,4-trimethyl-1,2-dihydroquinoline, 4,4'-bis(alpha,alpha-demthylbenzyl)diphenylamine, and alkylated diphenylamines. Antioxidants can be used in amounts of 0.1 to 5 percent by weight based on the weight of the composition.

A cable containing the semiconducting shield composition of the invention can be prepared in various types of extruders, e.g., single or twin screw types. Compounding can be effected in the extruder or prior to extrusion in a conventional mixer such as a Brabender™ mixer or a Banbury™ mixer. A description of a conventional extruder can be found in United States patent 4,857,600. An example of co-extrusion and an extruder therefor can be found in United States patent 5,575,965. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of 15:1 to 30:1. In wire coating, where the material is crosslinked after extrusion, the die of the crosshead feeds directly into a heating zone, and this zone can be maintained at a temperature in the range of 130°C to 260°C, and preferably in the range of 170°C to 220°C.

The advantages of the invention lie in the ability to add organic peroxide to granules or pellets of a semiconducting shield composition, which contains a sticky elastomer, at a temperature range where the organic peroxides will melt and flow easily. With this invention, the organic peroxide and semiconducting elastomer will be a homogeneous mixture without the accumulation of peroxide crystals on the pellet surface. In addition, the processing temperature will be below the sticking point of the elastomer in the semiconducting composition thereby preventing agglomeration and sticking of the granules or pellets such that a free flowing material is achieved. A reduction in the loss of peroxide commonly observed with pure liquid organic peroxides is also achieved due to the reduced volatility of the peroxide blend. Also, the use of dicumyl peroxide, which is often used in peroxide blends, is avoided and the scorch resistance of the semiconducting composition during extrusion is improved. Another advantage is that the invention can be used for strippable semiconducting compositions which contain sticky elastomers thereby reducing the number of peroxide systems utilized to accommodate different semiconducting shield compositions.

The term "surrounded" as it applies to a substrate being surrounded by an insulating composition, jacketing material, or other cable layer is considered to include extruding around the substrate; coating the substrate; or wrapping around the substrate as is well known by those skilled in the art. The substrate can include, for example, a core including a conductor or a bundle of conductors, or various underlying cable layers as noted above.

All molecular weights mentioned in this specification are weight average molecular weights unless otherwise designated.

The invention is illustrated by the following examples.

### Examples 1 to 3

The following examples show the freeze point and melt point of certain blends of bis(alpha-t-butyl peroxy isopropyl)benzene and t-butyl cumyl peroxide.

A convenient way of describing the melt point behavior of organic peroxide blends is to determine their cloud points, or rather the temperatures at which crystals form within solutions. This is done by melting a 20 gram sample in a 2.5 centimeter diameter glass test tube in a heated water bath. The sample is then allowed to cool slowly in air while stirring it with a thermometer. Seed crystals are added to the solution of organic peroxides if they are not already present on the side of the test tube. As the sample cools, a point is reached at which the sample becomes hazy, or slightly cloudy. This temperature is called the "haze point," and represents the temperature where crystallization of the organic peroxide blend begins. For the purpose of the description of this invention, the "haze point" temperature will be called the "freeze point." With continued cooling of the sample, a point is reached at which the thermometer can no longer be seen inside the column of organic peroxide. This temperature is called the "cloud point" and represents the solidification temperature for the organic peroxide blend.

The same sample is then warmed slowly with heated water. The temperature at which the solution is no longer cloudy is called the "haze free point". With further heating, the "clear point" is reached when the last of the crystals disappear. For the purpose of the description of this invention; the "clear point" temperature will be called the "melt point." Each sample is tested with this cooling and heating cycle three times. The results from the first cycle are ignored. Results from the next two cycles are retained only if they agree with each other to within 1 degree C.

The melt point is then the temperature to which a solid organic peroxide must be heated in order to be fully liquid before incorporation into a sticky elastomer. All equipment which is used to handle the organic peroxide must be set to at least this temperature, if not 5 to 10 degrees C higher to prevent crystallization. The freeze point represents the lowest temperature to which the peroxide can be cooled without crystals forming on the outside of the granules or pellets during the incorporation of the peroxide into the elastomer. The freeze point is also the minimum temperature at which an elastomer must be maintained in order to prevent the organic peroxide from forming crystals. In a soaking or blending process, pellets of an elastomer are exposed to liquid organic peroxide and then held at a constant temperature until the organic peroxide is absorbed by the polymer. If the polymer temperature is near or below the freeze point, absorption of the organic peroxide will not occur, and crystals of peroxide will form. Crystals of peroxide which form during a blending or soaking process present several material handling problems including potential safety problems if the crystals accumulate and are not removed properly.

The freeze point of the organic peroxide blend must be below the sticking temperature for the elastomer. If this is not the case, then the elastomer compound will tend to agglomerate during the organic peroxide addition process. This also presents several difficulties with material handling systems which are designed for free flowing granules or pellets of elastomeric compounds.

The following organic peroxide blends are prepared for melt point determination. The meta:para ratio is the weight percent ratio of isomers of bis(alpha-t-butyl peroxy isopropyl)benzene. The freeze point and melt point temperatures are measured using the method described above.

| Example No. | Bis(alpha-t-butyl peroxy isopropyl)benzene | | t-butyl cumyl peroxide | Freeze Point | Melt Point |
|---|---|---|---|---|---|
| | Meta:Para isomer ratio, wt% | Wt % | Wt% | (°C) | (°C) |
| 1 | 78:22 | 90 | 10 | 35 | 39 |
| 2 | 78:22 | 80 | 20 | 29 | 37 |
| 3 | 78:22 | 70 | 30 | 23 | 32 |

These blends show that the necessary freeze point maximum of 30 degrees C and the melt point maximum of 40 degrees C can be achieved with a blend of eutectic bis(alpha-t-butyl peroxy isopropyl)benzene (isomer weight ratio 78:22) and 15 to 20 weight percent of t-butyl cumyl peroxide based upon the weight of the organic peroxide composition.

### Comparative Examples 4 to 16

These examples show comparative blends of organic peroxides and their freeze points and melt points measured with the same method used in Examples 1 to 3.

| Ex. No. | Bis(alpha-t-butyl peroxy isopropyl)benzene | | t-butyl cumyl peroxide | dicumyl peroxide | Freeze Point | Melt Point |
|---|---|---|---|---|---|---|
| | Meta:Para isomer ratio, wt% | Wt % | Wt% | Wt% | (°C) | (°C) |
| 4 | 67:33 | 100 | 0 | 0 | 46 | 54 |
| 5 | 67:33 | 90 | 10 | 0 | 40 | 49 |
| 6 | 67:33 | 80 | 20 | 0 | 36 | 46 |
| 7 | 67:33 | 70 | 30 | 0 | 32 | 41 |
| 8 | 67:33 | 60 | 40 | 0 | 27 | 37 |
| 9 | 67:33 | 50 | 50 | 0 | 20 | 32 |
| 10 | 67:33 | 40 | 60 | 0 | 15 | 25 |
| 11 | 78:22 | 100 | 0 | 0 | 37 | 44 |
| 13 | 78:22 | 60 | 40 | 0 | 17 | 25 |
| 12 | 78:22 | 50 | 50 | 0 | 9 | 20 |
| 15 | 67:33 | 40 | 0 | 60 | 20 | 43 |
| 16 | 78:22 | 70 | 0 | 30 | 19 | 36 |

These comparative experiments show that when the commercial isomer weight ratio of 67:33 meta:para for bis(alpha-t-butyl peroxy isopropyl)benzene is mixed with liquid organic peroxide, 35 to 40 wt% t-butyl cumyl peroxide must be added in order to obtain a freeze point temperature less than 30 degrees C and a melt point less than 40 degrees C. Comparative examples 15 and 16 show the melt point behavior of bis(alpha-t-butyl peroxy isopropyl)benzene and dicumyl peroxide.

### Examples 17 and 18

These examples show the reduced volatility of the t-butyl cumyl peroxide when added at the low concentration of 20 weight percent to bis(alpha-t-butyl peroxy isopropyl)benzene (Example No. 2) when subjected to high temperature drying.

These formulations are prepared by adding the organic peroxides to pellets of a semiconducting elastomer with a dry blending process. The formulations shown are in weight percent with respect to the weight of the final composition.

| Example No. | 17 | 18 |
|---|---|---|
| Ethylene/Ethyl Acrylate Copolymer (18 wt% ethyl acrylate) | 59.6 | 59.5 |
| Carbon Black | 38 | 38 |
| polymerized 2,2,4-trimethyl-1,2-dihydroquinoline | 1.0 | 1.0 |
| peroxide blend Example 4 | 1.4 | 0.0 |
| peroxide blend Example 2 | 0.0 | 1.5 |

The compositions used for examples 17 and 18 are then subjected to dehumidified hopper drying at 70 degrees C for up to 12 hours. Dehumidified hopper drying is the process by which pellets of semiconductive compounds are dried in an open ended hopper with forced air that is heated and dehumidified with a desiccant bed to a dew point of about minus 40 degrees C. This practice is commonly used prior to extrusion of semiconducting conductor shield compositions to remove residual moisture from the material. When volatile organic peroxides are used, there is generally a safety concern with this practice as the volatile organic peroxide will be removed from the polymer compound and either emitted into the ambient air or collected on the desiccant bed.

| | | | | |
|---|---|---|---|---|
| Example No. | 17 | 17 | 17 | 17 |
| Drying Time at 70°C (hours) | 0 | 2 | 6 | 12 |
| MDR MH (kg-m) ((lbs-in)) | 19.9 (12.0) | 20.2 (12.2) | 20.6 (12.4) | 11.4 (6.9) |
| Wt% t-butyl cumyl peroxide | 0 | 0 | 0 | 0 |
| Wt% meta bis(alpha-t-butyl peroxy isopropyl)benzene | 0.9 | 0.8 | 0.8 | 0.5 |
| Wt% para bis(alpha-t-butyl peroxy isopropyl)benzene | 0.5 | 0.4 | 0.5 | 0.4 |
| Example No. | 18 | 18 | 18 | 18 |
| Drying Time at 70°C (hours) | 0 | 2 | 6 | 12 |
| MDR MH (kg-m) ((lbs-in)) | 21.6 (13.0) | 22.7 (13.7) | 22.9 (13.8) | 19.9 (12.0) |
| Wt% t-butyl cumyl peroxide | 0.3 | 0.3 | 0.3 | 0.1 |
| Wt% meta bis(alpha-t-butyl peroxy isopropyl)benzene | 0.9 | 0.9 | 0.9 | 0.9 |
| Wt% para bis(alpha-t-butyl peroxy isopropyl)benzene | 0.2 | 0.2 | 0.3 | 0.3 |

The MDR MH is the maximum torque which represents the total cure measured on a sample. MDR is a Moving Die Rheometer 2000 manufactured by Alpha Technologies, and is described in ASTM D5289. MH is the maximum torque recorded during the experiment, which is directly related to the total amount of active peroxide in the polymeric formulations. Test conditions used for cure are: 182 degrees C temperature; 0.5 degree arc; 100 cycles per minute oscillation; 16 minutes test time. Torque is reported in units of kilogram - metre (kg-m) (pounds-inch (lbs-in)).

These measurements of MH are recorded on samples after exposure to the drying time and temperature shown.

The amount of peroxide in the dried samples is measured by liquid chromatography after solvent extraction and is expressed as a weight percent based upon the weight of the composition.

These examples show that when t-butyl cumyl peroxide is added at low levels to a semiconducting composition, the amount of peroxide lost due to volatilization is no greater than for that normally removed from bis(alpha-t-butyl peroxy isopropyl)benzene alone. For both examples, significant loss of peroxide occurs between 6 and 12 hours of purge time.

### Examples 19 to 23

The following examples show the reduced volatility of liquid t-butyl cumyl peroxide when added at the low concentration of 18 to 25 weight percent to bis(alpha-t-butyl peroxy isopropyl)benzene compared to blends higher in concentration of the liquid peroxide.

The samples are prepared by mixing the peroxide into the semiconducting composition on a 2-roll mill. The compounds are then granulated and sieved to obtain uniform granules approximately 2 to 4 millimeters in diameter. These granules are placed in a single layer on the bottom of an aluminum pan and exposed to room temperature or 40 degrees C for 1 to 7 days. The degree of cure on the original and aged samples is measured with an MDR-2000 instrument, using the same test method as described in Examples 17to18. A decrease in the maximum torque, MH, indicates loss of peroxide due to volatilization.

The components are in weight percent with respect to the weight of the final composition.

| Example No. | 19 | 20 | 21 | 22 | 23 |
|---|---|---|---|---|---|
| Ethylene Vinyl Acetate Copolymer 33 wt% VA | 43.4 | 43.4 | 43.4 | 43.4 | 43.4 |
| Carbon Black | 34 | 34 | 34 | 34 | 34 |
| Nitrile Rubber | 19 | 19 | 19 | 19 | 19 |
| Processing aid (wax) | 2.0 | 2.0 | 2.0 | 2.0 | 2.0 |
| Diphenylamine derivative | 0.8 | 0.8 | 0.8 | 0.8 | 0.8 |

| (antioxidant) | | | | | |
|---|---|---|---|---|---|
| bis(alpha-t-butyl peroxy | 1.6 | 1.3 | 1.2 | 0.8 | 0.0 |
| isopropyl)benzene (meta:para=78:22 wt%) | | | | | |
| t-butyl cumyl peroxide | 0.0 | 0.3 | 0.4 | 0.8 | 1.6 |
| | | | | | |
| Original MDR MH | 16.3 | 14.9 | 15.6 | 17.9 | 12.4 |
| (kg-m)((lbs-in)) | (9.8) | (9.0) | (9.4) | (10.8) | (7.5) |
| MH (kg-m)((lbs-in)) | 16.9 | 16.3 | 17.1 | 16.3 | 12.3 |
| Aged 23°C, 1 day | (10.2) | (9.8) | (10.3) | (9.8) | (7.4) |
| MH (kg-m)((lbs-in)) | 16.9 | 16.1 | 16.4 | 15.3 | 11.1 |
| Aged 23°C, 3 days | (10.2) | (9.7) | (9.9) | (9.2) | (6.7) |
| MH (kg-m)((lbs-in)) | 16.9 | 16.1 | 14.6 | 12.1 | 8.6 |
| Aged 23°C, 7 days | (10.2) | (9.7) | (8.8) | (7.3) | (5.2) |
| | | | | | |
| MH (kg-m)((lbs-in)) | 16.4 | 14.9 | 13.6 | 11.8 | 5.6 |
| Aged 40°C, 1 day | (9.9) | (9.0) | (8.2) | (7.1) | (3.4) |
| MH (kg-m)((lbs-in)) | 15.4 | 14.1 | 11.6 | 7.0 | 6.8 |
| Aged 40°C, 3 days | (9.3) | (8.5) | (7.0) | (4.2) | (4.1) |
| MH (kg-m)((lbs-in)) | 12.8 | 11.6 | 7.5 | 6.0 | 3.0 |
| Aged 40°C, 7 days | (7.7) | (7.0) | (4.5) | (3.6) | (1.8) |

Examples 19 and 20 show ver similar stability of the MDR MH versus aging time at both 23 and 40 degrees C. At higher ratios of the liquid organic peroxide, t-butyl cumyl peroxide, the MH decreases very quickly. For the example with pure t-butyl cumyl peroxide (Example 23), the majority of the peroxide has evaporated after one day at 40 degrees C. These examples show the advantage of lower volatilization of the liquid organic peroxide component when added in small amounts to a normally solid organic peroxide.

### Examples 24 to 26

The following examples are prepared by mixing the peroxide into a semiconducting composition, based upon a sticky elastomer, using a 2-roll mill. The degree of cure on the samples is measured with an MDR-2000 instrument at 182 degrees C and is shown as MH. The 140 degrees C scorch times, ts1 and ts2, the times required for the torque to rise 1 and 2 kg-m (pounds-inch) above the minimum torque, are measured with the MDR-2000 instrument. Test conditions used with the MDR-2000 for scorch tests are: 140 degrees C temperature; 0.5 degree arc; 100 cycles per minute oscillation; 60 minutes test time. A longer scorch time (ts1 and ts2) indicates improved processability during extrusion.

| Example No. | 24 | 25 | 26 |
|---|---|---|---|
| Ethylene/Vinyl Acetate . Copolymer, 33 wt% VA | 42.8 | 42.9 | 43 |
| Carbon Black | 34 | 34 | 34 |
| Nitrile Rubber | 18 | 18 | 18 |
| Processing aids (metal stearates and oxides) | 3.2 | 3.2 | 3.2 |
| Diphenylamine derivative (antioxidant) | 0.8 | 0.8 | 0.8 |
| | | | |
| Peroxide from Example No. | 15 | 16 | 2 |
| bis(alpha-t-butyl peroxy isopropyl)benzene (meta:para = 67:33 wt%) | 0.5 | 0.0 | 0.0 |
| bis(alpha-t-butyl peroxy isopropyl)benzene (meta:para = 78:22 wt%) | 0.0 | 0.8 | 0.8 |
| dicumyl peroxide | 0.7 | 0.3 | 0.0 |
| t-butyl cumyl peroxide | 0.0 | 0.0 | 0.2 |
| | | | |
| MDR MH at 182 °C (kg-m) (Ibs-in) | 21.4 (12.9) | 22.9 (13.8) | 22.6 (13.6) |
| MDR ts1 at 140°C (min.) | 12 | 15 | 19 |
| MDR ts2 at 140°C (min.) | 23 | 28 | 35 |

Example 26 demonstrates that the scorch time increases with increasing concentration of bis (alpha-t-butyl peroxy isopropyl) benzene peroxides. This allows higher processing temperature and, therefore, improved productivity on compounds using a blend of bis(alpha-t-butyl peroxy isopropyl)benzene and a liquid peroxide which has a melt point low enough such that it will not cause pellet agglomeration during mixing with the peroxide.

## Claims

1. A composition comprising (i) 98 to 99.8 percent by weight of a crosslinkable, semiconducting elastomer, which agglomerates in the range of 30 to 40 degrees Celsius, and (ii) 0.2 to 2.0 percent by weight of an organic peroxide blend containing 70 to 90 percent by weight of a mixture of meta and para isomers of bis(alpha-t-butyl peroxyisopropyl)benzene in eutectic equilibrium and 10 to 30 percent by weight of a peroxide, which peroxide is liquid at minus 10 to plus 25 degrees Celsius.

2. The composition defined in claim 1 wherein the elastomer is a copolymer of ethylene and an unsaturated ester selected from the group consisting of vinyl esters, acrylic acid esters, and methacrylic acid esters wherein the ester is present in the copolymer in an amount of 10 to 60 percent by weight.

3. The composition defined in claim 1 or 2 wherein component (i) is present in an amount of 99 to 99.6 percent by weight and component (ii) is present in an amount of 0.4 to 1 percent by weight.

4. The composition defined in any one of the preceding claims wherein, in component (ii), the bis-peroxide is present in an amount of 75 to 85 percent by weight and the liquid peroxide is present in an amount of 15 to 25 percent by weight.

5. The composition defined in any one of the preceding claims wherein the elastomer is a blend of a polyolefin and a butadiene/acrylonitrile copolymer containing 10 to 50 percent by weight acrylonitrile based on the weight of the copolymer.

6. The composition defined in any one of the preceding claims wherein the elastomer is made semiconductive by the addition of a sufficient amount of conductive carbon black.

7. The composition defined in any one of the preceding claims wherein the liquid peroxide is t-butyl cumyl peroxide.

8. A cable comprising one or more electrical conductors or a core of electrical conductors, each conductor or core being surrounded by a composition as defined in any one of the preceding claims.

9. A cable comprising one or more electrical conductors or a core of electrical conductors, each conductor or core being surrounded by a composition comprising: (i) 99 to 99.6 percent by weight of a crosslinkable elastomer, which agglomerates in the range of 30 to 40 degrees Celsius and is a copolymer of ethylene and an unsaturated ester selected from the group consisting of vinyl esters, acrylic acid esters, and methacrylic acid esters wherein the ester is present in the copolymer in an amount of 10 to 60 percent by weight based on the weight of the copolymer; (ii) 0.4 to 1 part by weight of an organic peroxide blend containing 75 to 85 percent by weight of a mixture of meta and para isomers of bis(alpha-t-butyl peroxyisopropyl)benzene in eutectic equilibrium and 15 to 25 percent by weight of t-butyl cumyl peroxide; and (iii) sufficient conductive carbon black to make the elastomer semiconductive.

## Patentansprüche

1. Zusammensetzung, umfassend (i) 98 bis 99,8 Gew.-% eines vernetzbaren, halbleitenden Elastomeren, welches in dem Bereich von 30 bis 40 Grad Celsius agglomeriert, und (ii) 0,2 bis 2,0 Gew.-% einer organischen Peroxidmischung, die 70 bis 90 Gew.-% einer Mischung von meta- und para-Isomeren von Bis-(alpha-t-butylperoxyisopropyl)benzol im eutektischen Gleichgewicht und 10 bis 30 Gew.-% eines Peroxids, wobei dieses Peroxid bei minus 10 bis plus 25 Grad Celsius flüssig ist, enthält.

2. Zusammensetzung wie in Anspruch 1 definiert, in welcher das Elastomere ein Copolymeres von Ethylen und einem ungesättigten Ester, ausgewählt aus der Gruppe, die aus Vinylestern, Acrylsäureestern und Methacrylsäureestern besteht, ist, worin der Ester in dem Copolymeren in einer Menge von 10 bis 60 Gew.-% vorhanden ist.

3. Zusammensetzung wie in Anspruch 1 oder 2 definiert, in welcher Komponente (i) in einer Menge von 99 bis 99,6 Gew.-% und Komponenten (ii) in einer menge von 0,4 bis 1 Gew.-% vorhanden ist.

4. Zusammensetzung wie in irgendeinem der vorhergehenden Ansprüche definiert, in welcher Komponente (ii), das Bisperoxid in einer Menge von 75 bis 85 Gew.-% und das flüssige Peroxid in einer Menge von 15 bis 25 Gew.-% vorhanden ist.

5. Zusammensetzung wie in irgendeinem der vorhergehenden Ansprüche definiert, in welcher das Elastomere eine Mischung eines Polyolefins und eines Butadien/Acrylnitrilcopolymeren, das 10 bis 50 Gew.-% Acrylnitril, bezogen auf Gewicht des Copolymeren, enthält, ist.

6. Zusammensetzung wie in irgendeinem der vorhergehenden Ansprüche definiert, in welcher das Elastomere durch Zugabe von einer ausreichenden Menge eines leitfähigen Rußes halbleitfähig gemacht ist.

7. Zusammensetzung wie in irgendeinem der vorhergehenden Ansprüche definiert, in welcher das flüssige Peroxid t-Butylcumylperoxid ist.

8. Kabel, umfassend einen oder mehrere elektrische Leiter oder einen Kern von elektrischen Leitern, wobei jeder Leiter oder Kern von einer Zusammensetzung, wie in irgendeinem der vorhergehenden Ansprüche definiert, umgeben ist.

9. Kabel, umfassend einen oder mehrere elektrische Leiter oder einen Kern von elektrischen Leitern, wobei jeder Leiter oder Kern von einer Zusammensetzung umgeben ist, die umfaßt: (i) 99 bis 99,6 Gew-% eines vernetzbaren Elastomeren, welches in dem Bereich von 30 bis 40 Grad Celsius agglomeriert und ein Copolymeres von Ethylen und einem unge-sättigten Ester, ausgewählt aus der Gruppe, die aus Vinyl-estern, Acrylsäureestern und Methacrylsäureestern besteht,
ist, worin der Ester in dem Copolymeren in einer Menge von 10 bis 60 Gew.-%, bezogen auf das Gewicht des Copolymeren, vorhanden ist; (ii) 0,4 bis 1,0 Gew.-% einer organischen Peroxidmischung, die 75 bis 85 Gew.-% einer Mischung von metaund para-Isomeren von Bis(alpha-t-butylperoxyisopropyl)benzol im eutektischen Gleichgewicht und 15 bis 25 Gew.-% t-Butylcumylperoxid enthält; und (iii) ausreichend leitfähigen Ruß, um das Elastomere halbleitend zu machen.

## Revendications

1. Composition comprenant :
i) de 98 à 99,8 % en poids d'un élastomère réticulable semi-conducteur, qui s'agglomère dans l'intervalle allant de 30 à 40 °C,
ii) et de 0,2 à 2,0 % en poids d'un mélange de peroxydes organiques qui contient de 70 à 90 % en poids d'un mélange des isomères méta et para du bis(α-tertiobutyl-peroxy-isopropyl)benzène, en équilibre eutectique, et de 10 à 30 % en poids d'un peroxyde qui est liquide dans l'intervalle allant de -10 à +25 °C.

2. Composition conforme à la revendication 1, dans laquelle l'élastomère est un copolymère d'éthylène et d'un ester insaturé choisi dans l'ensemble constitué par les esters de vinyle, les esters de l'acide acrylique et les esters de l'acide méthacrylique, lequel ester se trouve présent dans le copolymère en une proportion pondérale de 10 à 60 %.

3. Composition conforme à la revendication 1 ou 2, dans laquelle le composant (i) se trouve en une proportion pondérale de 99 à 99,6 %, et le composant (ii) se trouve en une proportion pondérale de 0,4 à 1 %

4. Composition conforme à l'une des revendications précédentes, dans laquelle, dans le composant (ii), le bis-peroxyde se trouve en une proportion pondérale de 75 à 85 %, et le peroxyde liquide se trouve en une proportion pondérale de 15 à 25 %.

5. Composition conforme à l'une des revendications précédentes, dans laquelle l'élastomère est un mélange d'une polyoléfine et d'un copolymère d'acrylonitrile et de butadiène qui contient de 10 à 50 % en poids d'acrylonitrile, par rapport au poids du copolymère.

6. Composition conforme à l'une des revendications précédentes, dans laquelle l'élastomère est rendu semi-conducteur par addition d'une quantité suffisante de noir de carbone conducteur.

7. Composition conforme à l'une des revendications précédentes, dans laquelle le peroxyde liquide est du peroxyde de cumyle et de tertiobutyle.

8. Câble comportant un ou plusieurs conducteurs électriques ou une âme de conducteurs électriques, chaque conducteur ou âme étant enrobé d'une composition conforme à l'une des revendications précédentes.

9. Câble comportant un ou plusieurs conducteurs électriques ou une âme de conducteurs électriques, chaque conducteur ou âme étant enrobé d'une composition comprenant :
i) de 99 à 99,6 % en poids d'un élastomère réticulable, qui s'agglomère dans l'intervalle allant de 30 à 40 °C et qui est un copolymère d'éthylène et d'un ester insaturé choisi dans l'ensemble constitué par les esters de vinyle, les esters de l'acide acrylique et les esters de l'acide méthacrylique, lequel ester se trouve présent dans le copolymère en une proportion pondérale de 10 à 60 %, rapportée au poids du copolymère ;
ii) de 0,4 à 1 % en poids d'un mélange de peroxydes organiques qui contient de 75 à 85 % en poids d'un mélange des isomères méta et para du bis(α-tertiobutyl-peroxy-isopropyl)benzène, en équilibre eutectique, et de 15 à 25 % en poids de peroxyde de tertiobutyle et de cumyle ;
iii) et du noir de carbone conducteur, en une quantité suffisante pour rendre semi-conducteur l'élastomère.
